(19) Europäisches Patentamt

European Patent Office

Office européen des brevets

(11) EP 1 630 744 A1

(12) EUROPEAN PATENT APPLICATION

(43) Date of publication:
01.03.2006 Bulletin 2006/09

(51) Int Cl.:
*G06T 9/00* (2006.01)

(21) Application number: 04090331.2

(22) Date of filing: 26.08.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(71) Applicant: Thomson Licensing
92100 Boulogne Billancourt (FR)

(72) Inventors:
• Sahuc, David
35000 Rennes (FR)

• Francois, Edouard
35890 Bourg des Comptes (FR)
• Olivier, Yannick
35235 Thorigné Fouillard (FR)

(74) Representative: Hartnack, Wolfgang et al
Deutsche Thomson-Brandt GmbH
European Patent Operations
Karl-Wiechert-Allee 74
30625 Hannover (DE)

(54) **Method and apparatus for improved encoding of video signals using additional encoder information items, and corresponding storage medium**

(57) Most video data streams are digitally encoded as full rectangular shape objects. After its capture, the encoded video is post-processed in a studio and additional visual information items like advertisements, computer generated images and visual effects are composed before being encoded. Object oriented video encoding schemes like MPEG-4 enable the coding and transmission of video objects instead of a full composed rectangular video. However, in both encoding schemes all native or original visual information items like object or camera movements are lost during the composition phase. The loss of such information items leads to longer encoding times and loss of precision in the detected movements. According to the invention, originally available additional information items like movements of a camera or of objects in pictures, artificial video effects, colour characteristics or camera parameters are captured and made available to the video encoders in order to improve the encoding, e.g. by computing higher-quality motion vectors.

Fig.7

EP 1 630 744 A1

**Description**

The invention relates to improved encoding of video signals using temporal prediction, transform from time domain into frequency domain, quantisation of transform coefficients in the frequency domain, the encoding being carried out under control of additionally captured encoder information items.

Background

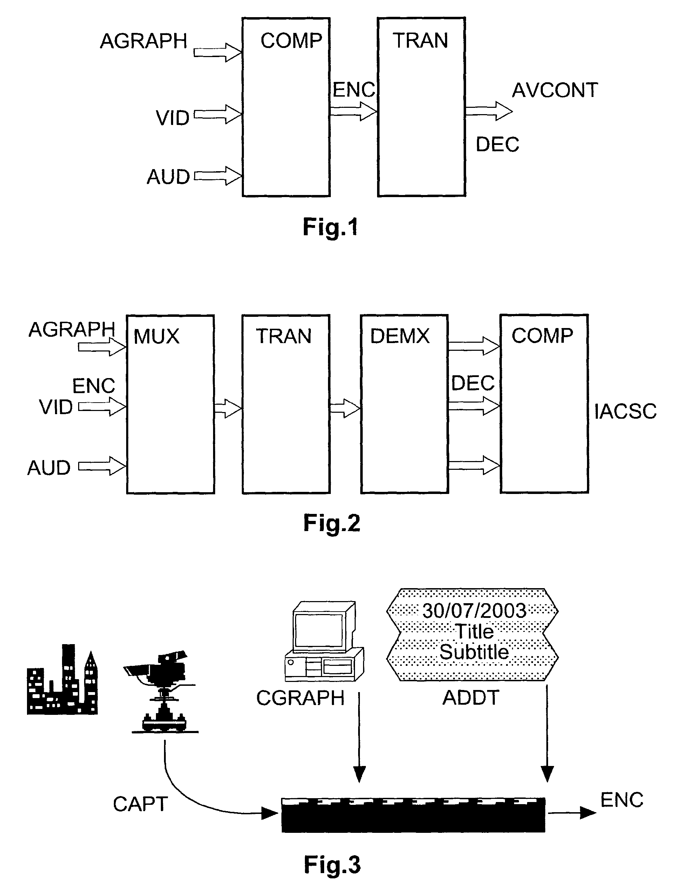

Most video data streams are digitally encoded as full rectangular shape objects for a specific format, e.g. CIF (common intermediate format), SDTV (standard definition TV), HDTV (high definition TV). Then, after its capture, the encoded video is post-processed in a studio and additional visual information items like advertisements, computer generated images and visual effects are composed before being encoded. This procedure is depicted in Fig. 1. For instance, animated graphics and text AGRAPH, video data items VID and audio data items AUD are fed to a composer COMP, are together encoded in an encoding ENC and transmitted as audio-video content AVCONT by a transmitter TRANS, and are at receiver or client side fed to an encoding DEC.
Thereby all native or original visual information items like objects or camera movements are lost during the composition phase. However, video encoders require such information items during encoding in order to compute high-quality motion vectors. The loss of such information items leads to longer encoding times and loss of precision in the detected movements.

Object oriented video encoding schemes like MPEG-4 enable the coding and transmission of video objects instead of a full composed rectangular video. Fig. 2 depicts a corresponding transmission chain. The input data items AGRAPH, VID and AUD are each processed in an encoding ENC and are thereafter fed to a multiplexer MUX. The multiplexer output signal passes through a transmitter TRAN, and at receiver or client side through a demultiplexer DEMX, a corresponding decoding DEC of the coded data items AGRAPH, VID and AUD and a composer COMP which assembles pictures using the decoded data items. Again, all originally available visual information items like object or camera movements are lost.

Invention

However, none of these technologies provides a method or means for storing or easily detecting original or native movements of objects and cameras, because today's content producers providing e.g. video capture or computer graphics do not save and store information that can be used by video encoders in a later processing step.

A problem to be solved by the invention is to improve the encoding quality and/or to reduce the required total computational power for the encoding. This problem is solved by the method disclosed in claim 1. An apparatus that utilises this method is disclosed in claim 2.

The invention deals with saving, storing and retrieving additional encoder information items that allow video encoders to shorten the encoding processing time and to improve quality, and advantageously can be implemented at both, production and post-production sides like studios to replace the current rectangular video production and authoring tools with object-oriented tools that keep information useful for the encoders. The additional encoder information items are captured, or generated, simultaneously or concurrently or coinciding with corresponding pictures or objects in a picture sequence. The additional encoder information items are related to current movements of a camera or of objects in pictures of said video signals, or to current artificial video effects or to colour characteristics of said video signals or to different importance of regions in pictures of said video signals, or to current camera parameters.

At production side, the invention modifies the currently used video capture devices to retrieve natural movements, and/or modifies the computer graphics tools, and facilitates storage of such data for use in subsequent encoding steps. At post-production side, the existing authoring tools are modified to manually or automatically add visual information items and movement data thereby preserving original movement information.
The invention facilitates improved encoding time and quality and can be implemented in full object oriented compression schemes like e.g. MPEG-4 Video, or in prior compression schemes like e.g. MPEG-2 Video and MPEG-1 Video.

In principle, the inventive method is suited for encoding video input signals using temporal prediction, transform of pixels or pixel differences from time domain into frequency domain and quantisation of transform coefficients in the frequency domain, including the steps:

- automatically capturing, or separately generating, concurrently with said video input signals additional encoder information items which are related to current movements of a camera or of objects in pictures of said video input signals, or to current artificial video effects or to colour characteristics of said video input signals or to different importance of regions in pictures of said video input signals, or to current camera parameters;
- using said additional encoder information items in at least one of said prediction, transform and quantisation to additionally control said encoding so as to improve the resulting coding quality or to reduce the total computational workload in said encoding.

In principle the inventive apparatus is suited for encoding video input signals using prediction, said apparatus including:

- temporal prediction means for a current reconstructed group of pixels;
- transform means being adapted for transformimg from time domain into frequency domain a current group of pixels or a current group of pixel differences derived from said predicted reconstructed group of pixels;
- quantisation means being adapted for quantising a corresponding current group of said frequency domain transform coefficients;
- means being adapted for receiving additional encoder information items that were automatically captured, or separately generated, concurrently with said video input signals, which additional encoder information items are related to current movements of a camera or of objects in pictures of said video input signals, or to current artificial video effects or to colour characteristics of said video input signals or to different importance of regions in pictures of said video input signals, or to current camera parameters,
  and for using said additional encoder information items in at least one of said prediction, transform and quantisation means to additionally control said encoding so as to improve the resulting coding quality or to reduce the total computational workload in said encoding.

Advantageous additional embodiments of the invention are disclosed in the respective dependent claims.

Drawings

Exemplary embodiments of the invention are described with reference to the accompanying drawings, which show in:

Fig. 1    known audio-visual processing chain for non-object oriented video compression;
Fig. 2    known audio-visual processing chain for object oriented video compression;
Fig. 3    known audio-visual authoring chain;
Fig. 4    audio-visual authoring chain according to the invention;
Fig. 5    depicts six different ways of camera movement;
Fig. 6    typical virtual camera settings;
Fig. 7    generic video compression system.

Exemplary embodiments

Professional digital video encoder systems exploit the motion between successive frames to improve their compression efficiency. This motion is exploited to reduce the temporal redundancies between the successive frames of the video. Basically, this implies a motion estimation that calculates motion vectors between frames, and a motion compensation that performs the prediction in the motion direction of a frame given its previous or next frame or frames. For instance, in the MPEG-1, -2 or -4 Video standards, motion is exploited in P (motion compensation using one previous frame) and B frames (motion compensation using two already encoded frames).
The motion estimation step is the main component of the encoder, for two main reasons:

- the resulting coding efficiency is highly dependent on the quality of this step;
- the related required computation time represents a large part of the total computation time needed for encoding a video sequence.

In present digital video authoring systems as represented in Fig. 3, the main video signal is originally captured CAPT and processed (or is captured as an analog video signal and converted into a digital one), thereafter computer generated images CGRAPH (computer graphics, visual effects) are applied and finally additional text ADDT or other additional information items like advertisements are added to the video sequence. This video sequence is then encoded ENC in a rectangular shape (SDTV, HDTV formats).

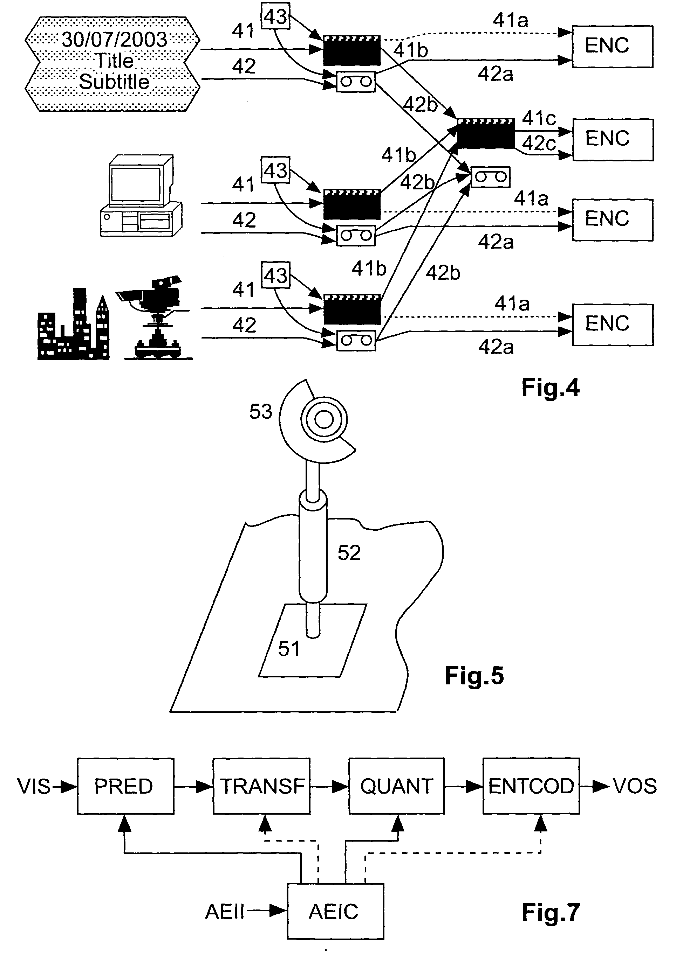

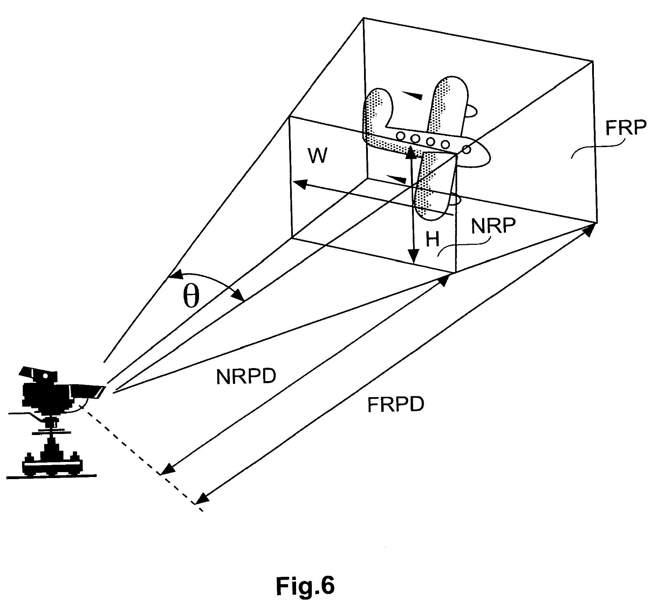

According to the invention, video capture or generation systems save and store original object movements, as well as original capture effects like fading and cuts. The corresponding authoring as represented in Fig. 4 shows a chain 41 representing the digital video chain. Chain 42 corresponds to information that can help encoders to improve calculation time and coding quality.

The action or device numbered 43 corresponds to an external automatised or manual modification of the video objects and their corresponding encoding information items. Such actions can also refer to an analysis of the object motions inside the video sequence to add more encoder information, as described below.

The 41a and 42a chains correspond to a full object-based video coding scheme like MPEG-4, i.e. each video object possesses its own coding sequence and its own encoding information applied to a corresponding encoding ENC.

The 41b and 42b chains relate to a rectangular video coding scheme like MPEG-2, i.e. all video objects are composed or arranged into a single video sequence before the complete sequence 41c is encoded in an encoding ENC using composed additional encoding information items 42c, whereby all separated encoding information items 42b have been composed or arranged, too, in order to form the composed additional encoding information items.

In chain 41 original video sources are captured or generated. If the related capture or generation devices like video cameras or computers are able to generate additional encoding information items, such items are saved and stored in chain 42 along with the video stream of chain 41.

In device or action 43, to the original video sources some automatised or manual treatment is applied, e.g. digitalisation, sequence cuts, colour adjustment and blue/green background extraction. From such treatment, some additional encoding information data can be retrieved and added to the originally captured encoding information data.

In case the video capture or generation devices cannot generate on their own additional encoding information items according to chain 42, such additional encoding information items can be generated automatically or manually in corresponding devices 43. Additionally, at this stage, manual low to high level information can be added such as actors name, atmosphere and/or type of video (sports, movie, news, etc). Depending on the above-mentioned video coding scheme, the video streams are either composed together in a single sequence, marked as 41c, or are encoded separately, marked as 41a. Therefore, additional encoding information is either treated separately, marked as 42a, or is composed together before encoding, marked as 42c.

Video capture devices can generate the following set of additional encoding information:

- device motions: vertical and horizontal, rotative;
- device capture settings: camera focal length (for zoom), gain, shutter, white balance, frame rate;
- device colour settings: colour or monochromatic, colour filters;
- capture format : aspect ratio, interlaced/progressive. Fig. 5 shows six different original camera movements. The connection 51 represents the liaison between the ground and the capture device, e.g. a video camera. Two degrees of movement $T_x$, Ty are available here that are the horizontal translations of the capture device on the ground. The connection 52 represents the vertical translation $T_z$ of the capture device. Connection 53 represents the possible rotations $R_x$, $R_y$ and $R_z$ of the capture device.

In addition to those freedoms of movement, video cameras have a variable focal length for optical zoom.

For achieving increased encoding quality it is advantageous to have capturing devices or systems which are able to provide such translation, rotation, zoom, distance and/or angle data. The use of captors, laser measuring systems (cf. publication RO-A-89965) or any other means to retrieve such data can be implemented on existing video capture systems. 2D/3D motion capture techniques used in computer graphics technologies can also be used at video capture level to retrieve natural original object movements and related motion information, cf. WO-A-0181859.

An images generator (synthetic images, still pictures, computer 2D and/or 3D graphics, text) can automatically generate the following information items, which are depicted in Fig. 6 showing typical virtual camera settings:

- objects motions: position, translations, rotations;
- objects characteristics: colours, textures, shapes, bounding shape;
- object planes: foreground or near plane NRP / near plane distance NRPD, background or far plane FRP / far plane distance FRPD, intermediate planes;
- virtual camera characteristics (frustum): 2D projection size width W and height H, camera angle θ.

Depending on the capability of the video coding scheme and the video capturing device, bounding shapes for digital video can be represented using the following techniques alone or in combination:

- rectangle or circle shapes;
- 2D polygons on the video plan;
- binary masks.

For example, MPEG-4 as described in MPEG-4 Video part 2 uses bounding rectangles with binary masks.

The size of the bounding shape may be limited to a factor of certain width and height, if the coding scheme is macroblock based as e.g. in MPEG-2 and MPEG-4 Video, and the digital format needs the precision to be pixel based. For example, bounding shapes are easily extracted when using computer graphics images, or blue or green background video capture.

Manual or automatic video effects can also provide interesting encoding information items, thanks to authoring tools, e.g. as used in post-production:

- black stripes to modify the captured video format to a specific format, e.g. widescreen or 16/9;
- video treatment and effects: rotating, zooming, colour adjustments, sequence cuts, video fades;
- blue/green background extraction or shapes extraction:

    example techniques for such extractions or for video segmentation are disclosed in WO-A-9842126 and WO-A-03036557. If no automatic technique is available, a user can create bounding shapes for objects in the video sequence (e.g. actors), and can add movement/motion information manually.

Preferably, the difference between 'natural', i.e. captured or automatically detected motions, and manually added motions is informed in the data format in order to set a level of reliability of the data. Manually added data can normally not be as precise as 'natural' data, but such manual data can nevertheless be used to retrieve an estimated motion direction, for example an operator-added information item about the movement of an object (e.g. actor) in front of the camera.

Considering the specific nature of video, that is frame rate based (e.g. 50Hz, 100Hz), encoder information should be linked to each video frame, but in case of interpolable information, they can be linked to a given video sequence, to shots or to each group of pictures (GOP).
Additional encoding information data can represent absolute information (i.e. based on a global or standard reference, e.g. an absolute position or a colour), relative information (i.e. differences to some other corresponding data), or temporal interpolation information (in the case of non-variable differences between 2 frames).

The following list summarises, for each type of information, which data items can be used for the encoding ENC of a picture sequence:

- Reliability of information: this can be implemented e.g. with a reliability level identifying whether the information is originated from capture, computer generation, extraction, detection or manual entry.
- Basis of the value of the information items: absolute, reference or interpolate basis. Depending on the type of basis, using some initialisation data may be necessary.
- Picture area that is affected: this can be a whole video frame, one or more specific regions or areas of a picture corresponding to one or more identified objects, e.g. actor or computer generated objects. Because such information is temporal it might need to be identified in at least two successive frames, and the use of an area identifier will improve the efficiency. Moreover, the use of such area identifier is advantageous if the area or the object shape evolves in time. The area or object shape can be of very different type, for example rectangular, pixel-based or polygonal.
- Type of information and its value: for each region or area, object shape or set of them, one or more information items can apply at the same time. Such information items can be:

- a single colour (e.g. black stripes) or specific pattern or texture (e.g. logo);
- main or prominent colour/colour tone, colour evolution (e.g. during an explosion effect);
- video treatments and effects e.g. video fading, video cross fading, video cut, mixing type;
- area/object shape motions, movements (translations/rotations), size evolution (e.g. the object moves away from the capture device), still areas (e.g. static background);
- capture device motions/movements (translations/rotations), angle or focal length evolutions, e.g. camera zooms;
- capture device controlled parameters such as shutter, camera gain, capture frame rate, white balance, aspect ratio;
- level of importance of the area/object (e.g. region of interest, point of focalisation);
- level of transparency, i.e. the alpha component (see below).

Basically, all such data types can be interpolated temporally.
The storage format of such information can be either in a proprietary format or a standardised format, compressed or not compressed. The article of Javier R. Hidalgo and Philippe Salembier, "Metadata-Based Coding Tools For Hybrid Video Codecs", Picture Coding Symposium PCS 2003, Saint-Malo, France, demonstrates the use of MPEG-7 format metadata for improving coding efficiency.
Basically, in case of using object-oriented systems where video streams can be transmitted separately and composed after or during decoding (like e.g. in MPEG-4) and the composition of the video data can be managed in the decoder, additional encoding information items are treated separately for each video sequence at encoder side. When using an MPEG-2-like encoding scheme, i.e. a rectangular video encoding, that composition of video sequences and additional encoding information items is performed prior or during the encoding.

Video sequences are composed in a layer composition model, i.e. the video sequences are superposed to each other in a certain order. This is known as "painter algorithm", in which the background is painted first and thereafter all objects from the most far plane to the nearest plane. Therefore the additional encoding information for each video sequence can be intersected to each other in the opposite order priority. For example, if two information items are concerning the same video area, the additional encoding information item from the nearest layer is used.

Some alpha channel information can be added for each object or plane, that is transparency. When transparency is applied on a layer, transparency coefficients are added to the information for the given area or areas of the video frame or frames, along with information of the underneath layer. There may be more than one underneath layer if transparent layers are superposed. Information items from the underneath layer or layers are kept consistent along with the alpha coefficient of the video stream so that the encoder can use them correctly.

If two video sequence frame rates are different and/or two video sequence frames don't have the same start time (frame based), one of these video sequences (namely the background sequence if it is a natural video sequence, i.e. a non-computer generated video sequence) is used as a master sequence and other sequences are re-sampled to fit that master sequence. Therefore, the additional encoding information items are re-sampled, too. Because basically such information items are temporally interpolable, the additional encoding information data can be computed from the re-sampling, using data from other video frames.

A generic compression system, i.e. encoder or encoding ENC in Fig. 4, includes four basic stages or blocks as shown in Fig. 7:

- a stage PRED receiving a video input signal VIS and a reconstructed video signal performing (temporal) motion prediction or estimation of a current group of pixels and a corresponding motion compensation for temporal redundancy reduction;
- a transform stage TRANSF for conversion of a current group of pixels into the frequency domain and for spatial prediction and redundancy reduction;
- a quantisation stage QUANT for psycho-visual redundancy reduction, in which transform coefficients of a current group of pixels are quantised using an adaptive quantiser step size;
- an entropy coding stage ENTCOD the operation of which is based on signal statistics using e.g. Huffman coding, and which generates an output binary stream VOS while further reducing the bitrate.

The additional encoding information items AEII are received by an additional encoding information controller AEIC which provides one or more of the stages PRED, TRANSF, QUANT and ENTCOD with correspondingly suitable additional encoding information data.

The motion estimation and compensation stage PRED also includes a mode decision component that is able to decide e.g. the best prediction type or mode, the motion vector to be selected finally (in case of multiple candidates), and the quantisation step size to be used. If the motion estimation is carried out in the time domain, the correspondingly inversely quantised and inversely transformed transform coefficients related to a current group of pixels are used for the motion estimation and compensation. A predicted pixel block is subtracted from a corresponding input pixel block and the current resulting pixel difference block is fed to the transform stage TRANSF.

In an alternative embodiment these stages can be assembled in a different way. For instance, the temporal prediction stage PRED can be arranged between the transform stage and the quantisation stage, whereby the prediction is carried out in the frequency domain. This choice depends on coding efficiency and complexity considerations.

The additional encoder information items provided to the encoder ENC can be used in the following ways:

| Additional encoding information item type | Can be exploited in the following stages or components |
|---|---|
| Area/object shape motions, movements (translations/ rotations), size evolution (e.g. if an object moves away from the capture device). Still areas, e.g. static background. | Temporal prediction (essentially motion estimation), mode decision. |
| Capture device motions/movements (translations/ rotations); angle or focal length evolutions, e.g. camera zooms. | Temporal prediction (essentially motion estimation), mode decision. |
| Video treatments and effects, e.g. fading, cross fading, cut, mixing type. | Motion estimation, mode decision. |

Table continued

| Additional encoding information item type | Can be exploited in the following stages or components |
| --- | --- |
| Level of importance of the area/object (region of interest, point of focalisation). | Quantisation, mode decision. |
| Main or prominent colour/colour tone; colour evolution, e.g. during an explosion effect. | Quantisation, mode decision. |
| A single colour (e.g. black stripes) or a specific pattern or texture (e.g. logo). | Quantisation, mode decision. |
| Capture device controlled parameters such as shutter, camera gain, capture frame rate, white balance, aspect ratio. | Motion estimation. |
| Level of transparency. | Motion estimation, temporal prediction (mainly bi-directional), mode decision. |

In the following, some examples for using such additional encoder information items in the encoding process are explained in more detail.

*Use in motion estimation:*

The knowledge of the global motion corresponding to the captured movement can be used efficiently by the motion estimator. The motion estimation computes motion vectors on groups of pixels. In MPEG terminology, a group is a block or macroblock of pixels. For a given group of pixels, the motion estimation process evaluates a number of candidate motion vectors, e.g. spatial predictors deduced from the neighbouring vectors. The best candidate is chosen and an additional refinement is achieved around that motion vector. According to the invention, this global motion information is used for computing a corresponding additional candidate motion vector to be considered for each group of pixels. Advantageously, this procedure improves the motion estimation quality while reducing its total computational cost.

*Use in detection of non-static and static areas:*

The global motion can also be used to detect areas in a picture or scene that have static or non-static picture content. In case the global motion is zero or near zero, each area in the image that does not have a motion vector (from the not additionally controlled motion estimation) coherent with the global motion can be considered as a being a non-static picture area. In case the global motion is non-zero, each area in the image that does not have a zero or near zero motion vector (from the not additionally controlled motion estimation) coherent with the global motion can be considered as a being a static picture area. This kind of information can be used in the above-mentioned decision process, for instance for improving the coding quality of such static areas by e.g. not allowing I (intraframe) processing but instead forcing P (temporally predicted) or B (bi-directio-nally temporally predicted) processing in static areas.

*Use in mode decision:*

The knowledge of non-static areas or of size evolution of objects can be used in the mode decision process by favouring these areas in terms of encoding quality. This can be achieved by using a lower quantisation step (i.e. a finer quantisation) for these areas. Another possibility is giving in these areas more importance to low distortion than to coding cost. Indeed the decision process is generally based on the computation of a criterion that mixes a distortion measure D (for instance the residual error obtained after coding-decoding) and a coding cost measure C (e.g. the number of bits used). For a given group of pixels, a decision is made between several possible encoding modes (e.g. intra, inter forward, inter backward, bi-directional) using the criterion:

$$E(m) = D(m) + \lambda.C(m) \,,$$

wherein D is a measure of the distortion, C is a measure of the coding cost, m is the tested mode, and λ is a predetermined parameter that controls the relative weight of the coding cost. Non-static areas can be favoured by using a smaller $\lambda$ than for the other areas.

*Use in GOP structuring:*

The knowledge of video treatments, i.e. additional encoder information, greatly improves GOP structuring. In existing video compression standards the encoding process is based on groups of pictures (GOP). The first picture of a GOP is encoded as an intra picture that is not dependent from past or future pictures. To improve the coding efficiency, the GOP length can vary, or an additional intra picture can be inserted, each time a special effect or event occurs in the picture sequence, for example a cut, scene change or cross fading. Such special effects are normally detected by automatic processes in the encoder which, however, may fail. Using instead directly the corresponding additional encoder information items will avoid such failures.

The invention can be used in digital TV transmission, and when producing or recording optical discs like DVD and Bluray.

The invention achieves reduction of encoding time and/or increase of encoding quality by means of availability of precise additional input data which are provided by video capture or generation devices/systems with automatic or manual input, along with the related video sequence being linked to these additional input data.

## Claims

1. Method for encoding (ENC) video input signals (VIS, 41) using temporal prediction (PRED), transform (TRANSF) of pixels or pixel differences from time domain into frequency domain and quantisation (QUANT) of transform coefficients in the frequency domain, including the steps:

   - automatically capturing (42), or separately generating (43), concurrently with said video input signals (VIS, 41) additional encoder information items (AEII) which are related to current movements of a camera or of objects in pictures of said video input signals, or to current artificial video effects or to colour characteristics of said video input signals or to different importance of regions in pictures of said video input signals, or to current camera parameters;
   - using said additional encoder information items (AEII) in at least one of said prediction (PRED), transform (TRANSF) and quantisation (QUANT) to additionally control said encoding so as to improve the resulting coding quality or to reduce the total computational workload in said encoding.

2. Apparatus for encoding (ENC) video input signals (VIS, 41) using prediction, said apparatus including:

   - temporal prediction means (PRED) for a current reconstructed group of pixels;
   - transform means (TRANSF) being adapted for transforming from time domain into frequency domain a current group of pixels or a current group of pixel differences derived from said predicted reconstructed group of pixels;
   - quantisation means (QUANT) being adapted for quantising a corresponding current group of said frequency domain transform coefficients;
   - means (AEIC) being adapted for receiving additional encoder information items (AEII) that were automatically captured, or separately generated, concurrently with said video input signals (VIS, 41), which additional encoder information items (AEII) are related to current movements of a camera or of objects in pictures of said video input signals, or to current artificial video effects or to colour characteristics of said video input signals or to different importance of regions in pictures of said video input signals, or to current camera parameters, and for using said additional encoder information items (AEII) in at least one of said prediction, transform and quantisation means to additionally control said encoding so as to improve the resulting coding quality or to reduce the total computational workload in said encoding.

3. Method according to claim 1, or apparatus according to claim 2, wherein said encoding is an MPEG-1 or an MPEG-2 or an MPEG-4 encoding.

4. Method according to claim 1 or 3, or apparatus according to claim 2 or 3, wherein said current camera parameters are at least one of focal length, gain, shutter, white balance, colour or monochromatic, colour filters, frame rate, aspect ratio, interlaced or progressive, vertical camera motion, horizontal camera motion, rotative camera motion.

5. Method according to one of claims 1, 3 or 4, or apparatus according to one of claims 2 to 4, wherein said current artificial video effects are at least one of rotating, zooming, colour adjustments, sequence cuts, video fades, video cross fades, mixing type, transparency.

6.  Method according to one of claims 1 and 3 to 5, wherein at least one of said current movements of a camera or of objects in pictures of said video input signals and said current artificial video effects, additionally control said temporal prediction (PRED), in particular a motion estimation in said temporal prediction,
    or apparatus according to one of claims 2 to 5, wherein at least one of said current movements of a camera or of objects in pictures of said video input signals and said current artificial video effects, additionally control said temporal prediction means (PRED), in particular a motion estimation in said temporal prediction means.

7.  Method according to one of claims 1 and 3 to 6, wherein said current camera parameters additionally control a motion estimation in said temporal prediction (PRED),
    or apparatus according to one of claims 2 to 6, wherein said current camera parameters additionally control a motion estimation in said temporal prediction means (PRED).

8.  Method according to one of claims 1 and 3 to 7, wherein at least one of a level of importance of a current object or a partial region of a current picture or a prominent colour tone or a colour evolution additionally control said quantisation (QUANT),
    or apparatus according to one of claims 2 to 7, wherein at least one of a level of importance of a current object or a partial region of a current picture or a prominent colour tone or a colour evolution additionally control said quantisation means (QUANT).

9.  Method or apparatus according to one of claims 6 to 8 wherein, if from said additional encoder information items (AEII) a 'zero' or near-zero global motion is detected, regions in a picture to which a 'zero' or near-zero motion vector is not assigned in the not additionally controlled motion estimation are considered as representing a non-static picture content region,
    and if from said additional encoder information items (AEII) a non-'zero' global motion is detected, regions in a picture to which a 'zero' or near-zero motion vector is assigned in the not additionally controlled motion estimation are considered as representing a static picture content region.

10. Storage medium, e.g. an optical disc, having stored
    thereon an encoded picture sequence which was encoded using a method according to one of claims 1 to 9.

**Fig.1**

**Fig.2**

**Fig.3**

30/07/2003
Title
Subtitle

41
43
41b
41a
42
42a

42b

41c
42c

41b

41
43
42b
42
41a
42a

41b
42b

41
43
42
41a
42a

ENC

ENC

ENC

ENC

**Fig.4**

53

52

51

**Fig.5**

VIS → | PRED | → | TRANSF | → | QUANT | → | ENTCOD | → VOS

AEII → | AEIC |

**Fig.7**

**Fig.6**

**European Patent Office**

## EUROPEAN SEARCH REPORT

Application Number

EP 04 09 0331

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | H.J.A.M. HEIJMANS, C. BERNARD, M. DOMANSKI, B. PESQUET-POPESCU, A. SMOLIC, P. SCHELKENS, L. TORRES: "MASCOT: metadata for advanced scalable video coding tools (Final report)" CENTRUM VOOR WISKUNDE EN INFORMATICA, [Online] 30 June 2003 (2003-06-30), XP002310967 ISSN: 1386-3711 Retrieved from the Internet: URL:http://www.cwi.nl/ftp/CWIreports/PNA/P NA-R0307.pdf> [retrieved on 2004-12-16] * page 7, line 1 - page 15, line 43 * ----- | 1-8,10 | G06T9/00 |
| X,D | J. R. HIDALGO, P. SALEMBIER: "Metadata-based coding tools for hybrid video codecs" 23RD PICTURE CODING SYMPOSIUM 2003, SAINT MALO, FRANCE, APR 23-25 2003, [Online] 23 April 2003 (2003-04-23), pages 473-477, XP002310966 Retrieved from the Internet: URL:http://gps-tsc.upc.es/imatge/_Jrh/docs /RuizSalembier_PCS03.pdf> [retrieved on 2004-12-16] * page 476, right-hand column, line 4 - page 477, right-hand column, line 25 * * page 473, left-hand column, line 1 - page 475, right-hand column, line 5 * ----- | 1-8,10 | |
| X | US 2003/122942 A1 (JOSHI RAJAN L ET AL) 3 July 2003 (2003-07-03) * paragraphs [0008] - [0010] * | 10 | |
| A | * paragraphs [0029] - [0031], [0056], [0057] * ----- -/-- | 1-9 | |

TECHNICAL FIELDS SEARCHED (Int.Cl.7)

G06T

The present search report has been drawn up for all claims

| Place of search | Date of completion of the search | Examiner |
|---|---|---|
| Munich | 16 December 2004 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**European Patent Office**

**EUROPEAN SEARCH REPORT**

Application Number

EP 04 09 0331

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 03/075116 A (CLEMIE GRAHAM ; T5 LABS LTD (GB); DUCKETT DEDRICK (US)) 12 September 2003 (2003-09-12) * page 9, line 23 - page 12, line 4 * * page 7, line 1 - line 24 * ----- | 1-10 | |

TECHNICAL FIELDS SEARCHED (Int.Cl.7)

The present search report has been drawn up for all claims

| Place of search | Date of completion of the search | Examiner |
|---|---|---|
| Munich | 16 December 2004 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 09 0331

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2004

| Patent document cited in search report | | Publication date | Patent family member(s) | | Publication date |
|---|---|---|---|---|---|
| US 2003122942 | A1 | 03-07-2003 | EP 1345447 A2 | | 17-09-2003 |
| | | | JP 2003250132 A | | 05-09-2003 |
| WO 03075116 | A | 12-09-2003 | EP 1483741 A2 | | 08-12-2004 |
| | | | WO 03075116 A2 | | 12-09-2003 |

EPO FORM P0459

For more details about this annex : see Official Journal of the European Patent Office, No. 12/82